# EUROPEAN PATENT APPLICATION

(11) **EP 4 564 158 A1**
(43) Date of publication of application: **04.06.2025**
(21) Application number: 23213755.4
(22) Date of filing: 01.12.2023
(51) Int. Cl.: G06F 8/00, G06F 8/36, G06F 11/34, G06F 8/70

(54) **METHOD AND SYSTEM FOR AUTOMATIC GENERATION OF ADD-IN PROGRAMS IN ENGINEERING SYSTEM**

(71) Applicant: Siemens Aktiengesellschaft, 80333 München (DE)
(72) Inventor: BANSAL, Rahul, 560100 Bangalore, Karnataka (IN); DACHEPALLI, Pratap Simha, 508213 Suryapet, Telangana (IN)
(74) Representative: Isarpatent

(57) **Abstract**

The present invention provides a method and system for automatically generating an add-in program for an engineering system. The method comprises receiving, by a processing unit (202), a plurality of user actions from a user. The method comprises clustering, by the processing unit (202), the plurality of user actions into a plurality of sequences of user actions, by implementation of a sequence recognition algorithm on the plurality of user actions. The method further comprises determining, by the processing unit (202), one or more sequences of user actions, by implementation of a sequence identification procedure on the plurality of sequences of user actions. The determined one or more sequences are iterated in the plurality of sequences of user actions. The method further comprises generating, by the processing unit (202), an add-in program by implementation of an add-in generation procedure on the determined one or more sequences of user actions.

## Description

The present invention relates to a field of industrial automation, and more particularly relates to a method and system for automatically generating an add-in program for an application program in an engineering system.

An application program is configured to perform a plurality of functions within an engineering system. The plurality of functions includes but is not limited to a project creation function, a device activation function, a device configuration function, and a project deletion function. A user is enabled to input into the application program, a command which is specific to a function to cause the application program to execute the function. The user is enabled to input the command via an input device such as a touch screen, a human machine interface, a computer mouse, or voice based input.

In one example, a sequence of functions has to be performed by the application program, so that a specific objective of the user is achieved. The specific objective of the user may be a purpose or condition which has to be fulfilled in the engineering system to ensure an optimum functioning of the engineering system. In one example, the sequence of functions is referred to as a workflow. In such a case, the user has to input a sequence of commands to cause the application program to perform the sequence of functions. In a case where, the sequence of functions have to be performed repeatedly, the user has to input the sequence of commands repeatedly. Thus, the user has to perform redundant and repetitive tasks in order to achieve the specific objective.

In conventional systems, an add-in program is used to remedy the aforementioned problem. An add-in program is a supplemental program that is added into the application program. The add-in program adds custom commands and features into the application program. For example, the add-in program is activated with an input of a single command and furthermore, the add-in program causes the application programs to perform a sequence of functions. Thus, the user is saved from an ordeal of having to input a sequence of commands to cause the application program to perform the sequence of functions.

In existing systems, add-in programs are scripted manually by coders. The coders have to manually identify a set of sequences of functions or a set of workflows which are repeatedly used by a user, and then script the add-in program such that the identified set of sequences of functions are executed by the add-in program. Thus, a round trip time for a creation and a deployment of the add-in program in the application program is usually large. Furthermore, the set of sequences of workflow comprises information which is confidential to a company which uses the application program. Thus, allowing the coders to peruse such information often results in a breach of data security. Furthermore, the users of the application program do not have necessary knowledge and skill to generate such add-in programs.

Furthermore, in a realm of factory automation, each user of a plurality of users of the application program has a different job designation. Hence workflows commonly used by each user is different from workflows used by other users of the plurality of users. Thus, each add-in program has to be developed such that the add-in program is tailor made for each user of the plurality of users. Generating such add-in programs manually for each user of the plurality of users is an expensive, time intensive and impossible endeavor.

In light of above, there exists a need for an efficient and cost effective method and system for automatically generating an add-in program for each user of a plurality of users of an application program running in an engineering system. Therefore, it is an object of the present invention to provide an efficient and cost effective method and system for automatically generating an add-in program for each user of a plurality of users of an application program running in an engineering system.

The object of the invention is achieved by a method for automatic generation of an add-in program in an engineering system.

The engineering system, as referenced herein, comprises a plurality of components and processes. The plurality of components and processes are interconnected and designed to achieve specific technical objectives. In one example, the engineering system is configured to achieve technical objective in a plurality of disciplines, such as mechanical, electrical, software, and power generation. For example, the engineering system may be deployed in diverse fields, including but not limited to manufacturing, telecommunications, transportation, and energy. The term "engineering system" as used herein is intended to encompass a broad spectrum of technical architectures and configurations, ranging from discrete hardware components to complex software-driven platforms, all designed to perform specific functions or tasks within the broader context of engineering applications.

An application program within the engineering system refers to a software component specifically designed to execute a plurality of predefined tasks or functions to cause the engineering system to achieve the specific technical objectives. In one example, the application program is implemented as standalone software application. In other examples, the application program comprises integrated modules within a larger software framework. Examples of the application programs include, but is not limited to a control algorithm, a simulation tool, a data processing application, and a user interface. The application program within the engineering system, as described herein, embody innovative and tailored software solutions essential for seamless integration and optimal performance of the engineering system.

The add-in program, as referenced herein, refers to a software component designed to perform a series of predefined functions with a single command, eliminating a plurality of users to manually input a sequence of commands. The add-in program is a supplemental program that is added into one of the application program or the engineering system. The add-in program adds custom commands and features into one of the application program or the engineering system. For example, the add-in program is activated with an input of a single command and furthermore, the add-in program causes one of the application program or the engineering system to perform a sequence of functions. In a case where the add-in program does not exist, a user may have had to input a sequence of commands to cause the application program or the engineering system to execute the sequence of functions. Thus, the user is saved from an ordeal of having to input a sequence of commands to cause the application program to perform the sequence of functions.

One of the engineering system or the application program is configured to receive a plurality of user inputs continuously from an operator or a user of the engineering system. The plurality of user input comprises one or more commands, one or more text inputs or one or more voice inputs. The plurality of user inputs further comprises a spectrum of interactions, including but not limited to command inputs through graphical user interfaces, parameter adjustments, initiation of simulation scenarios, or any other directive provided by the operator or the user. The plurality of user input is received by the engineering system via an input device such as a human machine interface. The plurality of user inputs, hereinafter referred to as a plurality of user actions, constitute commands initiated by the operator or the user to instruct one of the application program or the engineering system.

Each user action of the plurality of user actions corresponds to a specific command. Upon receiving each user action of the plurality of user actions, one of the engineering system or the application program is triggered to perform a predefined function within the engineering system. The operator or the user is enabled to configure, direct, or modify a behavior of the application program or the engineering system, by use of the plurality of user actions, thereby influencing an overall execution and output of the engineering system. The term "user actions" within the scope of this patent pertains to a dynamic and an interactive nature of a human-machine interface associated with the engineering system. The operator or the user is enabled to exert control and influence over the application program to tailor one or more operations of the application program according to the evolving requirements of an engineering process.

In one example, each user action of the plurality of user actions is identified in the engineering system, with an identifier. The identifier of a user action is a data object which comprises a name of the user action, a purpose of the user action, and one or more code segments associated with the user action. The one or more code segments associated with the user action comprises one or more code statements which is executed by one of the engineering system or the application program, when the user action is received by the engineering system. In one example, the one or more code segments comprise portions of the source code of one of the application program or the engineering system. In another example, the one or more code segments comprises one or more function calls or procedural calls to invoke one or more functions which are scripted into the source code of the application program. In such a case, the one or more functions are executed by the engineering system whenever the user action is received by the engineering system.

The identifier of the user action further comprises a natural language description of the one or more functions which are executed by the engineering system, upon reception of the user action in the engineering system. In other words, the identifier is a crucial data object designed to store information directly linked to one or more user actions received by the engineering system. Furthermore, each identifier is structured to encapsulate further details pertinent to specific user actions, thereby forming a sequence which mirrors a chronological order in which the one or more user actions are received in one of the engineering system or the application program. Thus, a string of identifiers allows for a cohesive representation of user activity in one of the engineering system or the application program. Examples of the identifier include alphanumeric codes based identifiers, timestamp-based identifiers, and security code based identifiers. In one example, the identifier for each user action, is assigned by the engineering system simultaneously with a reception of the user action at the engineering system. In another example, the identifier for each user action is scripted by a coder who has coded the application program. The identifier of the user action may be stored in the engineering system and is referenced by the engineering system when the user action is received by the engineering system.

The engineering system further comprises an automation module configured to monitor the continuously received plurality of user actions. The automation module is further configured to determine a plurality of patterns within the received plurality of user actions. In one example, the automation module monitors the continuously received plurality of user actions by implementation of a natural language processing algorithm on one or more identifiers associated with each user action of the plurality of user actions. The one or more identifiers comprises a natural language based description of one or more functions associated with the user action. The automation module is configured to apply the natural language processing algorithm on the natural language based description of one or more functions to determine the plurality of patterns within the received plurality of user actions. In one example, the plurality of patterns comprises a user based pattern, a function type based pattern, and a time of reception based pattern.

The user based pattern refers to a pattern which categorizes user actions based on a characteristics and preferences of individual user or operator input the plurality of user actions. For instance, the user based pattern refers to specific sequences of actions or favored functionalities that individual users of the engineering system or the application program frequently engage with. The automation module is configured to determine the user based pattern based on a user profile of the user or the operator and also by the application of the natural language processing algorithm on the natural language based description of one or more functions. Thus, recognition of the user-based pattern enhances personalization, allowing the automation module capture specific behaviors of each user of the engineering system or the application program.

The function type-based pattern refers to a pattern which categorizes the user action according to a type of function or task which is executed by one of the engineering system or the application program upon reception of the user action. The automation module is configured to determine the function type-based pattern based on a user profile of the user or the operator and also by the application of the natural language processing algorithm on the natural language based description of one or more functions. For example, the automation module is configured to identify patterns related to specific functions, such as a file upload function, a data search function, or a communication function.

The time of reception pattern, as referenced herein, refers to a pattern which the plurality of user actions based on the specific times at which each user action is received. By systematically analyzing the temporal aspects of user engagement, the automation module enables identification of recurring sequences, trends, or behaviors that manifest at particular points in time. Such temporal patterns provide valuable insights into user preferences, habits, and system interactions, ultimately contributing to the enhancement of user experience and the optimization of various applications.

In another example, the automation module is configured to monitor each user action of the plurality of user actions by mapping the user action to a set of predefined user actions which is defined in a mapping table. The automation module is further configured to group the plurality of user actions into a plurality of sequences of user actions. In one example, the automation module is configured to generate the plurality of sequences of user actions based on the determined plurality of patterns in the plurality of user actions. Each sequence of the plurality of sequences of user actions is indicative of a specific workflow of a plurality of workflows. In other words, the method comprises analyzing, by a processing unit, the plurality of user actions received from the user to generate the plurality of sequences of user actions.

In one embodiment, the automation module comprises a software-based solution configured to monitor user actions within the engineering system. The software based solutions leverages one or more algorithms to continuously monitor the plurality of user actions. In an alternative embodiment, the automation module takes the form of a dedicated hardware device integrated into the engineering system.

In one example, the automation module is configured to analyze the plurality of sequences of user actions by implementation of a sequence recognition algorithm on the plurality of user actions. The sequence recognition algorithm may be a machine learning algorithm such as a KNN classification algorithm. The sequence recognition algorithm is configured to cluster the plurality of user actions to the plurality of sequences of user actions. In one example, the sequence recognition algorithm comprises a neural network such as a deep neural network which is trained to cluster the plurality of user actions into the plurality of sequences by use of a labelled dataset.

The neural network is trained by implementation of a supervised learning algorithm on the neural network and a labelled data set. The labelled dataset comprises a set of user actions, which are grouped and labelled into a set of sequences by a data engineer. The set of user actions comprise a set of identifiers which has information about each user action of the plurality of user actions. By application of the supervised learning algorithm on the labelled dataset, the neural network is trained to identify sequences within the plurality of user actions. In another example, the neural network is trained by application of a non-supervised learning algorithm on the set of user actions. Thus, the trained neural network is configured to determine the plurality of sequences of user actions within the received plurality of user actions. In other words, the method comprises applying, by the processing unit, the trained neural network on the plurality of user actions. The method further comprises generating, by the processing unit, the plurality of sequences of user actions based on the application of the trained machine learning model on the plurality of user actions. Advantageously, the machine learning model can be trained in a way which is advantageous and tailor made for the user. Thus, the generated plurality of sequences of user actions are generated in a such a way that each of the plurality of sequences of user actions are selected specifically for the user.

In another example, the sequence recognition algorithm is implemented as computer code which, when executed by a processing unit, causes the automation module to analyze and identify specific user actions from the plurality of user actions. To implement the sequence recognition algorithm, the automation module is configured to compare each user action of the plurality of user actions with a list of user defined user actions. The user defined user actions are user actions which are defined by the user or the operator. The automation module is further configured to identify the specific user actions from the plurality of user action, based on the comparison. The automation module is further configured to employ the identified user actions as trigger points to ascertain a sequence of user actions. For example, the computer code in the automation module is coded such that the automation module is configured to identify a first type of user action as an initiation point and a second user action as a conclusion point. The automation module is further configured to effectively delineate a defined scope between the initiation point and the conclusion point as a sequence of user actions. In other words, the automation module is configured to classify one or more user actions received between the identified initiation point and the identified conclusion point as part of the sequence of user actions. Advantageously, the list of user defined user actions can be generated and modified by the user in accordance with one or more preferences of the user.

For example, a first user action such as "a user selecting an engineering object" is identified as the initiation point and a second user action such as "the user unselecting the engineering object" is identified as the conclusion point. Thus, the one or more user actions performed by the operator or the user on between the selection and the un-selection of the engineering object is determined as a sequence of user actions. Similarly, the automation module is configured to determine a plurality of sequences of user actions from the received plurality of user actions. Each sequence of the plurality of sequences of user actions comprises a string of identifiers which correspond to one or more user actions in the sequence. The string of identifiers associated with a sequence of user actions comprises information associated with each user action of in the sequence of user actions. In other words, the method comprises clustering, by the processing unit, the plurality of user actions into the plurality of sequences of user actions, by implementation of the sequence recognition algorithm on the plurality of user actions. The method further comprises analyzing, by the processing unit, the plurality of sequence of user actions by implementation of a sequence identification procedure.

In one example, the sequence identification procedure comprises one or more computational steps to determine a count of times in which each sequence of the plurality of sequences of user actions are iterated within a specific time interval. In one example, the specific time interval is indicative of a work session of the user or of the operator of the engineering system. In another example, the specific time interval is indicative of a user defined time duration. The sequence identification procedure further comprises determining, by the processing unit, a first set of sequences of user actions, where each user action of the first set of user actions are iterated for more than a specific number of times, within the specific time interval. Advantageously, the automation module automatically identifies the first set of sequences which are frequently used by the user or the operator.

In another example, the sequence identification procedure comprises determining, by the processing unit, whether one or more user actions of each sequence of the plurality of sequences has a specific pattern of the plurality of patterns. For example, the automation module is configured to determine whether the one or more user actions of each sequence of the plurality of sequences has a function-type pattern associated with a specific function in the engineering system. The m sequence identification procedure further comprises determining, by the processing unit, a second set of sequences of user actions which have more than a specific number of user actions which has the specific pattern.

The method further comprises selecting, for the add-in program, one or more sequences of user actions from at least one of the first set and the second set of sequences of user actions. Advantageously, the one or more sequences of user actions are selected from a pool of sequences which are dynamically determined based on one or more user defined parameters, without any manual intervention.

The method further comprises comparing, by the processing unit, at least one user action of the determined one or more sequences of user actions with a specific mapping table. The specific mapping table comprises a list of specific user actions. In one example, the list of specific user actions are assigned by a coder or the user or the operator. The method further comprises determining, by the processing unit that the at least one user action matches with one or more user actions of the list of specific user actions, based on the comparison. In one example, the list of specific user actions have an "OPEN" user action. In a case where the at least one user action is an "OPEN" user action, then the automation module is configured to determine that the at least one user action matches with the list of specific user actions.

In a case where the at least one user action of the determined one or more sequences matches with the list of specific user actions, the automation module is further configured to generate at least one add-in program by implementation of an add-in generation procedure on the determined one or more sequences of user actions. To execute the add-in generation procedure on the determined one or more sequences of user actions, the processing unit executes a plurality of steps.

In a first step of the plurality of steps, the processing unit is configured to extract a string of identifiers from the determined one or more sequence of user actions. In a second step of the plurality of steps, the processing unit is configured to extract one or more code segments from the extracted string of identifiers. In a third step of the plurality of steps, the processing unit is configured to implement a string concatenation procedure to concatenate the one or more code segments to generate the add-in program. Identifiers in the string of identifiers are arranged in an order which is corresponding to order of user actions in the determined one or more sequences of user actions. The one or more code segments are concatenated based on the order or arrangement of the string of identifiers. In a fourth step of the plurality of steps, the processing unit is configured to extract, from the string of identifiers, a natural language description of each user action in the determined one or more sequences of user actions. In a fifth step, the processing unit is configured to generate a natural language description for the generated add-in program by implementation of the string concatenation procedure on the extracted natural language description of each user action in the determined one or more sequences of user actions. Advantageously, the add-in program is automatically generated without manual intervention. Furthermore the add-in program is generated based on the one or more sequences determined specifically for the user.

The method further comprises displaying, by the processing unit, information associated with the generated at least one add-in program to the user or the operator. The displayed information associated with the generated at least one add-in program comprises the natural language description of the at least one add-in program. The displayed information further includes the natural language description of each user action in the determined one or more sequences of user actions. The displayed information further comprises information associated with the one or more code statements extracted from the string of identifiers. The displayed information further comprises one or more user commands which can be used to invoke the generated at least one add-in program. In one example, the one or more user commands may be a text based command, a voice based command, a gesture based command, or a mouse click based command. Advantageously, the automation module learns from continuously received user actions from the user and provides recommendations to the user to optimize the user's effort.

The method further comprises displaying, by the processing unit, information associated with the plurality of patterns associated with the plurality of user actions, as determined by the automation module. The method further comprises receiving, by the processing unit, a plurality of user inputs from the user in the engineering system. The plurality of user inputs are indicative of one or more modifications to be made in the generated at least one add-in program. The one or more modifications include a change of name, a change in one or more user actions or executing a deletion procedure of the at least one add-in program. The method further comprises modifying the generated at least one add-in program based on the one or more modifications as indicated in the plurality of user inputs.

The method further comprises comparing, by the processing unit, the determined one or more sequences of user actions with a set of sequences of user actions. The set of sequences of user actions comprises user actions which are stored for reference in a database. Each sequence of the set of sequences of user actions is linked to a set of add-in programs. A plurality of linkages between the set of add-in programs and each sequence of the set of sequences of user actions may be assigned by the user or the operator. The method further comprises determining, by the processing unit, whether a sequence, of the set of sequences, matches with the determined one or more sequences of user actions. In a case where the sequence matches with the determined one or more sequences of user actions, the processing unit is configured to determine from the set of add-in programs, an add-in program which is linked to the determined sequence of the set of sequences. The method further comprises displaying, by the processing unit, the determined add-in program to a user. In a case where the sequence does not match with the determined one or more sequences of user actions, the processing unit is configured to deploy the generated at least one add-in program into the engineering system.

The method further comprises comparing with a list of user actions, one or more user actions of the determined one or more sequences of user actions. Each user action of the list of user actions is associated with a specific sequence of user actions of the plurality of sequences of user actions. The method further comprises determining, by the processing unit, whether the one or more user actions of the determined one or more sequences of user actions, match with at least one user action of the list of user actions. The method further comprises displaying, by the processing unit, the specific sequence of user actions which is associated with the at least one user action. The method further comprises generating, by the processing unit, one or more add-in programs based on the specific sequence of user actions, wherein the specific sequence of user actions comprises one or more user actions which diverge from the determined one or more sequences of user actions.

The object of the present invention is also achieved by an engineering system for automatically generating an add-in program for an engineering system. The engineering system comprises a processing unit and a memory coupled to the processing unit. The memory comprises an automation module stored in the form of machine-readable instructions executable by the processor. The automation module is configured for performing the method as described above.

The object of the present invention is also achieved by an industrial environment. The industrial environment comprising an engineering system, a industrial plant comprising one or more physical components and a plurality of human machine interfaces communicatively coupled to the engineering system and the industrial plant. The engineering system is configured to perform the above described method steps.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of automatically generating an add-in program for an engineering system, according to an embodiment of the present invention;
- FIG 2: is a block diagram of an engineering system, such as those shown in FIG. 1, in which an embodiment of the present invention can be implemented;
- FIG 3: is a block diagram of an automation module, such as those shown in FIG 2, in which an embodiment of the present invention can be implemented;
- FIG 4: is a process flowchart illustrating an exemplary method of automatic generation of add-in programs, according to an embodiment of the present invention; and
- FIG 5: is an exemplary illustration of a method of automatic generation of add-in programs, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

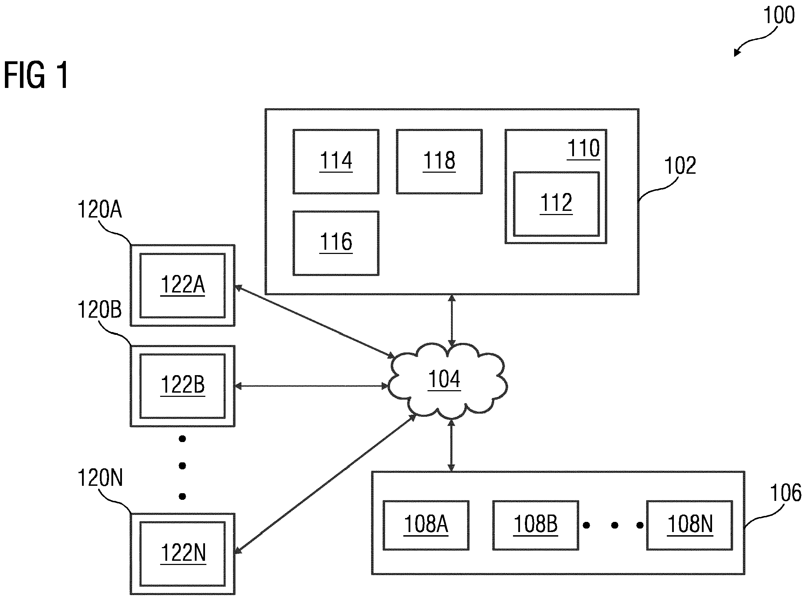

FIG 1 is a block diagram of an industrial environment 100 capable of automatically generating an add-in program for an engineering system 102, according to an embodiment of the present invention. In FIG 1, the industrial environment 100 includes the engineering system 102, and a plurality of human machine interfaces 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to the via a network connection 104 (such as Local Area Network (LAN), Wide Area Network (WAN), Wi-Fi, Internet, any short range or wide range communication). The engineering system 102 is also connected to the plurality of human machine interfaces 120A-N via the network connection 104.

The engineering system 102 comprises an application toolbar 106 comprising a plurality of add-in programs 108A-N. The application toolbar 106 is an interactive graphical user interface which serves as a central hub for a plurality of users to access and manage various functionalities of the engineering system 102 seamlessly. The application toolbar 106 comprises a plurality of graphical icons and hyperlinks, which when activated by a user, causes the engineering system 102 to invoke at least one of the plurality of add-in programs 108A-N. Furthermore, the application toolbar 106 is configured to receive keyboard shortcuts and gesture-based interactions, thus empowering users with alternative methods for accessing the one or more functionalities of the engineering system 102. This approach caters to a diverse user base and promotes a more streamlined workflow. In one example, the application toolbar 106 is a programmed object which is programmed using web technologies such as HTML5, CSS3, and JavaScript frameworks.

Although, FIG 1 illustrates the engineering system 102 connected to one industrial plant 106, one skilled in the art can envision that the engineering system 102 can be connected to several industrial plants located at different geographical locations via the network connection 104.

The plurality of human machine interfaces 120A-N may be a desktop computer, laptop computer, tablet, smart phone and the like. Each of the plurality of human machine interfaces 120A-N is provided with an engineering tool 122A-N for controlling the engineering system 102. The plurality of human machine interfaces 120A-N can access the engineering system 102 for automatically generating engineering programs. The plurality of human machine interfaces 120A-N can access cloud applications. Throughout the specification, the terms "human machine interface", "client device" and "user device" are used interchangeably. The plurality of human machine interfaces 120A-N are further configured to receive a plurality of user actions from a plurality of users. The plurality of user actions comprises user inputs, user commands, user gestures, programming instructions, and user passwords.

The engineering system 102 may be a standalone server deployed at a control station or may be a remote server on a cloud computing platform. In a preferred embodiment, the engineering system 102 may be a cloud-based engineering system. The engineering system 102 may comprise a digitalization platform 110 (such as a cloud computing platform), an automation module 112, a server 114 including hardware resources and an operating system (OS), a network interface 116 and a database 118. The network interface 116 enables communication between the engineering system 102, the industrial plant 106, and the plurality of human machine interfaces 120A-N.

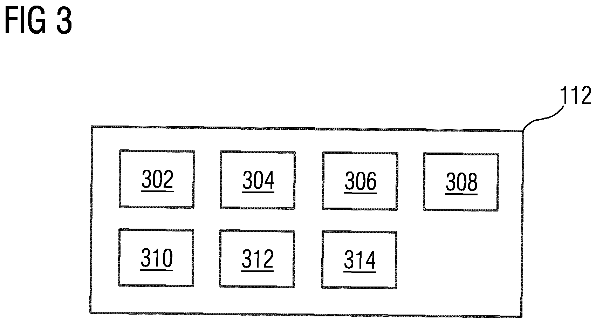

The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. In one example, the digitalization platform 110 may be implemented in the server 114. The digitalization platform 110 enables functionalities such as data reception, data processing, data rendering, data communication, etc. using the hardware resources and the OS of the servers 114 and delivers the aforementioned services using the application programming interfaces deployed therein. The digitalization platform 110 may comprise a combination of dedicated hardware and software built on top of the hardware and the OS. In an exemplary embodiment, the digitalization platform 110 may correspond to an Integrated Development Environment (IDE) comprising program editors and compilers which allow the users of the plurality of human machine interfaces 120A-N to generate engineering programs. The digitalization platform 110 may further comprise the automation module 112 configured for automatically generating at least one add-in program. Details of the automation module 112 is explained in FIG. 3.

The database 118 stores the information relating to the industrial plant 106, the plurality of add-in programs 108A-N, the plurality of human machine interfaces 120A-N. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the digitalization platform 110. The database 118, according to another embodiment of the present invention, is a location on a file system directly accessible by the automation module 112.

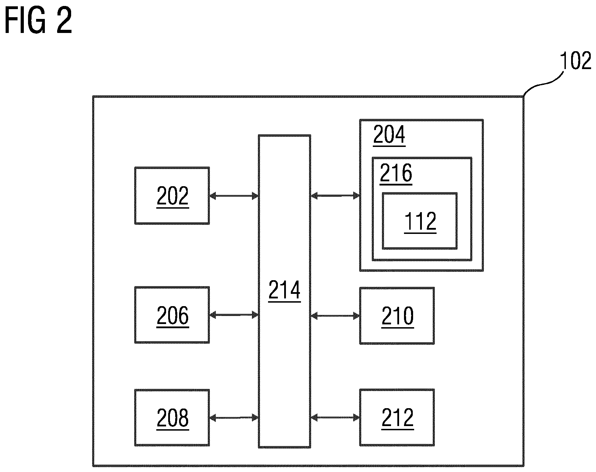

FIG 2 is a block diagram of an engineering system 102, such as those shown in FIG 1, in which an embodiment of the present invention can be implemented. In FIG 2, the engineering system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, a neural processing unit (NPU) or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the automation module 112 stored in the form of machine-readable instructions on any of the above-mentioned storage media and may be in communication with and executed by the processor(s) 202.

In one example, the engineering system 102, as referenced herein, comprises a plurality of components and processes. The plurality of components and processes are interconnected and designed to achieve specific technical objectives. In one example, the engineering system 102 is configured to achieve technical objective in a plurality of disciplines, such as mechanical, electrical, software, and power generation. For example, the engineering system 102 may be deployed in diverse fields, including but not limited to manufacturing, telecommunications, transportation, and energy. The term "engineering system" as used herein is intended to encompass a broad spectrum of technical architectures and configurations, ranging from discrete hardware components to complex software-driven platforms, all designed to perform specific functions or tasks within the broader context of engineering applications.

The application toolbar 106 is present within an application program of the engineering system 102, The application program within the engineering system 102 refers to a software component specifically designed to execute a plurality of predefined tasks or functions to cause the engineering system 102 to achieve the specific technical objectives. In one example, the application program is implemented as standalone software application. In other examples, the application program comprises integrated modules within a larger software framework. Examples of the application programs include, but is not limited to a control algorithm, a simulation tool, a data processing application, and a user interface. The application program within the engineering system 102, as described herein, embody innovative and tailored software solutions essential for seamless integration and optimal performance of the engineering system 102.

The application program is configured to receive a plurality of user inputs continuously from an operator or a user of the engineering system 102. The plurality of user input comprises one or more commands, one or more text inputs or one or more voice inputs. The plurality of user inputs further comprises a spectrum of interactions, including but not limited to command inputs through graphical user interfaces, parameter adjustments, initiation of simulation scenarios, or any other directive provided by the user or the operator. The plurality of user input is received by the engineering system 102 via an input device such as any one of the plurality of human machine interfaces 120A-N. The plurality of user inputs, hereinafter referred to as a plurality of user actions, constitute commands initiated by the operator or the user to instruct the application program.

Each user action of the plurality of user actions corresponds to a specific command. Upon receiving each user action of the plurality of user actions, the application program is triggered to perform a predefined function within the engineering system 102. The operator or the user is enabled to configure, direct, or modify a behavior of the application program, by use of the plurality of user actions, thereby influencing an overall execution and output of the engineering system. The term "user actions" within the scope of the present invention pertains to a dynamic and an interactive nature of a human-machine interface associated with the engineering system 102. The operator or the user is enabled to exert control and influence over the application program to tailor one or more operations of the engineering system 102 according to the evolving requirements of an engineering process.

Each add-in program of the plurality of add-in programs 108AN, as referenced herein, refers to a software component designed to perform a series of predefined functions with a single command, eliminating a need for a a plurality of users to manually input a sequence of commands. Each add-in program is a supplemental program that is added into one of the application program or the engineering system 102. The add-in program adds custom commands and features into one of the application program or the engineering system 102. For example, the add-in program is activated with an input of a single command and furthermore, the add-in program causes one of the application program or the engineering system to perform a sequence of functions. In a case where the add-in program does not exist, a user may have had to input a sequence of commands to cause the application program or the engineering system 102 to execute the sequence of functions. Thus, the user is saved from an ordeal of having to input a sequence of commands to cause the application program to perform the sequence of functions.

In one example, each user action of the plurality of user actions is recorded in the engineering system 102, by use of an identifier. The identifier of a user action is a data object which comprises a name of the user action, a purpose of the user action, and one or more code segments associated with the user action. The one or more code segments associated with the user action comprises one or more code statements which is executed by the engineering system 102 when the user action is received by the engineering system 102. In one example, the one or more code segments comprise portions of the source code of the application program. In another example, the one or more code segments comprises one or more function calls or procedural calls to invoke one or more functions which are scripted into the source code of the application program. In such a case, the one or more functions are executed by the engineering system 102 whenever the user action is received by the engineering system 102.

The identifier of the user action further comprises a natural language description of the one or more functions which are executed by the engineering system 102, upon reception of the user action in the engineering system 102. In other words, the identifier is a crucial data object designed to store information directly linked to one or more user actions received by the engineering system 102. Furthermore, each identifier is structured to encapsulate details pertinent to specific user interactions, forming a sequence which mirrors a chronological order in which the one or more user actions are received in the engineering system 102. Thus, a string of identifiers allows for a cohesive representation of user activity in the engineering system 102. Examples of the identifier include alphanumeric codes based identifiers, timestamp-based identifiers, and security code based identifiers. In one example, the identifier for each user action, is assigned by the engineering system 102 simultaneously with a reception of the user action at the engineering system. In another example, the identifier for each user action is scripted by a coder who has coded the application program. The identifier of the user action may be stored in the engineering system 102 and is referenced by the engineering system 102 when the user action is received by the engineering system 102.

When executed by the processing unit 202, the automation module 112 is configured to cause the processing unit 202 to monitor the continuously received plurality of user actions. The automation module 112 is further configured to cause the processing unit 202 to determine a plurality of patterns within the received plurality of user actions.

In one example, the automation module 112 is configured to monitor the continuously received plurality of user actions by implementation of a natural language processing algorithm on one or more identifiers associated with each user action of the plurality of user actions. It is noted that the one or more identifiers comprises a natural language description of the user action. Thus, the automation module 112 is configured to determine a purpose of each user action by implementation of the natural language processing algorithm on the one or more identifiers. The automation module is configured to apply the natural language processing algorithm on the natural language based description of one or more functions to determine the plurality of patterns within the received plurality of user actions. In one example, the plurality of patterns comprises a user based pattern, a function type based pattern, and a time of reception based pattern.

The user based pattern refers to a pattern which categorizes user actions based on a characteristics and preferences of individual user or operator input the plurality of user actions. For instance, the user based pattern refers to specific sequences of actions or favored functionalities that individual users of the engineering system or the application program frequently engage with. The automation module is configured to determine the user based pattern based on a user profile of the user or the operator and also by the application of the natural language processing algorithm on the natural language based description of one or more functions. Thus, recognition of the user-based pattern enhances personalization, allowing the automation module capture specific behaviors of each user of the engineering system or the application program.

The function type-based pattern refers to a pattern which categorizes the user action according to a type of function or task which is executed by one of the engineering system or the application program upon reception of the user action. The automation module is configured to determine the function type-based pattern based on a user profile of the user or the operator and also by the application of the natural language processing algorithm on the natural language based description of one or more functions. For example, the automation module is configured to identify patterns related to specific functions, such as a file upload function, a data search function, or a communication function.

The time of reception pattern, as referenced herein, refers to a pattern which the plurality of user actions based on the specific times at which each user action is received. By systematically analyzing the temporal aspects of user engagement, the automation module enables identification of recurring sequences, trends, or behaviors that manifest at particular points in time. Such temporal patterns provide valuable insights into user preferences, habits, and system interactions, ultimately contributing to the enhancement of user experience and the optimization of various applications.

In another example, the automation module 112 is configured to monitor each user action of the plurality of user actions by mapping the user action to a set of predefined user actions which is defined in a mapping table. The automation module 112 is further configured to group the plurality of user actions into a plurality of sequences of user actions, based on the determined plurality of patterns. Each sequence of the plurality of sequences of user actions is indicative of a specific workflow of a plurality of workflows. In other words, the method comprises analyzing, by a processing unit, the plurality of user actions received from the user to determine the plurality of sequences of user actions.

In one embodiment, the automation module 112 comprises a software-based solution configured to monitor user actions within the engineering system 102. The software based solutions leverages one or more algorithms to continuously monitor the plurality of user actions. In an alternative embodiment, the automation module 112 takes the form of a dedicated hardware device integrated into the engineering system 102. The hardware module is equipped with one or more sensors to monitor the plurality of user actions. Through a combination of sensor data analysis, the hardware module identifies the plurality of patterns in the received plurality of user actions. Such a hardware implementation of the automation module 112 offers a seamless and responsive user experience, capitalizing on the efficiency of dedicated hardware resources to enhance the overall performance and reliability of the engineering system 102.

In one example, the automation module 112 is configured to analyze the plurality of user actions by implementation of a sequence recognition algorithm on the plurality of user actions. The sequence recognition algorithm may be a machine learning algorithm such as a KNN classification algorithm. The sequence recognition algorithm is configured to cluster the plurality of user actions to the plurality of sequences of user actions. In one example, the sequence recognition algorithm comprises a neural network such as a deep neural network which is trained to cluster the plurality of user actions into the plurality of sequences by use of a labelled dataset.

The neural network is trained by implementation of a supervised learning algorithm on the neural network and a labelled data set. The labelled dataset comprises a set of user actions, which are grouped and labelled into a set of sequences by a data engineer. By application of the supervised learning algorithm on the labelled dataset, the neural network is trained to identify sequences within the plurality of user actions. In another example, the neural network is trained by application of a non-supervised learning algorithm on the set of user actions. Thus, the trained neural network is configured to determine the plurality of sequences of user actions within the received plurality of user actions. The automation module 112 is configured to apply the trained neural network on the plurality of user actions. In other words, the automation module 112 is configured to generate the plurality of sequences of user actions based on the application of the trained machine learning model on the plurality of user actions.

In another example, the sequence recognition algorithm is implemented as computer code which, when executed by a processing unit 202, causes the automation module 112 to analyze and identify specific user actions from the plurality of user actions. To implement the sequence recognition algorithm, the automation module 112 is configured to compare each user action of the plurality of user actions with a list of user defined user actions. The user defined user actions are user actions which are defined by the user or the operator. The automation module 112 is further configured to identify the specific user actions from the plurality of user action, based on the comparison. The automation module 112 is further configured to employ the identified user actions as trigger points to ascertain a sequence of user actions. For example, the computer code in the automation module 112 is coded such that the automation module 112 is configured to identify a first type of user action as an initiation point and a second user action as a conclusion point. The automation module 112 is further configured to effectively delineate a defined scope between the initiation point and the conclusion point as a sequence of user actions. In other words, the automation module 112 is configured to classify one or more user actions received between the identified initiation point and the identified conclusion point as part of the sequence of user actions.

For example, a first user action such as "a user selecting an engineering object" is identified as the initiation point and a second user action such as "the user unselecting the engineering object" is identified as the conclusion point. Thus, the one or more user actions performed by the operator or the user on between the selection and the un-selection of the engineering object is determined as a sequence of user actions. Similarly, the automation module 112 is configured to determine a plurality of sequences of user actions from the received plurality of user actions. Each sequence of the plurality of sequences of user actions comprises a string of identifiers which correspond to one or more user actions in the sequence. The string of identifiers associated with a sequence of user actions comprises information associated with each user action of in the sequence of user actions. In other words, the automation module causes the processing unit 202 to cluster the plurality of user actions into the plurality of sequences of user actions, by implementation of the sequence recognition algorithm on the plurality of user actions.

The automation module 112 is further configured to cause the processing unit 202 to analyze the plurality of sequence of user actions by implementation of a sequence identification procedure. The sequence identification procedure comprises one or more computational steps to determine a count of times in which each sequence of the plurality of sequences of user actions are iterated within a specific time interval. In one example, the specific time interval is indicative of a work session of the user or of the operator of the engineering system 102. In another example, the specific time interval is indicative of a user defined time duration. The sequence identification procedure further comprises determining, by the processing unit 202, a first set of sequences of user actions, where each user action of the first set of user actions are iterated for more than a specific number of times, within the specific time interval. Advantageously, the automation module 112 automatically identifies the first set of sequences which are frequently used by the user or the operator.

In another example, the sequence identification procedure comprises determining, by the processing unit 202, whether one or more user actions of each sequence of the plurality of sequences has a specific pattern of the plurality of patterns. For example, the automation module 112 is configured to determine whether the one or more user actions of each sequence of the plurality of sequences has a function-type pattern associated with a specific function in the engineering system. The sequence identification procedure further comprises determining, by the processing unit 202, a second set of sequences of user actions which have more than a specific number of user actions with the specific pattern.

The method further comprises selecting, for the add-in program, one or more sequences of user actions from at least one of the first set and the second set of sequences of user actions. Advantageously, the one or more sequences of user actions are selected from a pool of sequences which are dynamically determined based on one or more user defined parameters, without any manual intervention.

The automation module 112 is further configured to compare at least one user action of the determined one or more sequences of user actions with a specific mapping table. The specific mapping table comprises a list of specific user actions. In one example, the list of specific user actions are assigned by a coder or the user or the operator. The automation module 112 is further configured to determine that the at least one user action matches with one or more user actions of the list of specific user actions, based on the comparison. In one example, the list of specific user actions have an "OPEN" user action. In a case where the at least one user action is an "OPEN" user action, then the automation module is configured to determine that the at least one user action matches with the list of specific user actions.

In a case where the at least one user action of the determined one or more sequences matches with the list of specific user actions, the automation module 112 is further configured to generate at least one add-in program by implementation of an add-in generation procedure on the determined one or more sequences of user actions. To execute the add-in generation procedure on the determined one or more sequences of user actions, the processing unit 202 executes a plurality of steps. In a first step of the plurality of steps, the processing unit 202 is configured to extract a string of identifiers from the determined one or more sequence of user actions. In a second step of the plurality of steps, the processing unit 202 is configured to extract one or more code segments from the extracted string of identifiers. In a third step of the plurality of steps, the processing unit 202 is configured to implement a string concatenation procedure to concatenate the one or more code segments to generate the add-in program. Identifiers in the string of identifiers are arranged in an order which is corresponding to order of user actions in the determined one or more sequences of user actions. The one or more code segments are concatenated based on the order or arrangement of the string of identifiers. In a fourth step of the plurality of steps, the processing unit 202 is configured to extract, from the string of identifiers, a natural language description of each user action in the determined one or more sequences of user actions. In a fifth step, the processing unit 202 is configured to generate a natural language description for the generated add-in program by implementation of the string concatenation procedure on the extracted natural language description of each user action in the determined one or more sequences of user actions.

The automation module 112 further causes the processing unit 202 to display information associated with the generated at least one add-in program to the user or the operator. The displayed information associated with the generated at least one add-in program comprises the natural language description of the at least one add-in program. The displayed information further includes the natural language description of each user action in the determined one or more sequences of user actions. The displayed information further comprises information associated with the one or more code statements extracted from the string of identifiers. The displayed information further comprises one or more user commands which can be used to invoke the generated at least one add-in program. In one example, the one or more user commands may be a text based command, a voice based command, a gesture based command, or a mouse click based command.

The automation module 112 further causes the processing unit 202 to display information associated with the plurality of patterns associated with the plurality of user actions, as determined by the machine learning module in the automation module 112. The automation module 112 is further configured to receive a plurality of user inputs from the user in the engineering system. The plurality of user inputs are indicative of one or more modifications to be made in the generated at least one add-in program. The one or more modifications include a change of name, a change in one or more user actions or executing a deletion procedure of the at least one add-in program. The method further comprises modifying the generated at least one add-in program based on the one or more modifications as indicated in the plurality of user inputs.

The automation module 112 is configured to compare the determined one or more sequences of user actions with a set of sequences of user actions. The set of sequences of user actions comprises user actions which are stored for reference in a database. Each sequence of the set of sequences of user actions is linked to a set of add-in programs. A plurality of linkages between the set of add-in programs and each sequence of the set of sequences of user actions may be assigned by the user or the operator. The automation module 112 is further configured to determine whether a sequence, of the set of sequences, matches with the determined one or more sequences of user actions. In a case where the sequence matches with the determined one or more sequences of user actions, the processing unit 202 is configured to determine from the set of add-in programs, an add-in program which is linked to the determined sequence of the set of sequences. The automation module 112 is further configured to display the determined add-in program to a user. In a case where the sequence does not match with the determined one or more sequences of user actions, the processing unit is configured to deploy the generated at least one add-in program into the engineering system.

The automation module 112 is further configured to compare, with a list of user actions, one or more user actions of the determined one or more sequences of user actions. Each user action of the list of user actions is associated with a specific sequence of user actions of the plurality of sequences of user actions. The automation module 112 is further configured to determine whether the one or more user actions of the determined one or more sequences of user actions, match with at least one user action of the list of user actions. The automation module 112 is further configured to display the specific sequence of user actions which is associated with the at least one user action. The automation module 112 is further configured to generate one or more add-in programs based on the specific sequence of user actions. The specific sequence of user actions comprises one or more user actions which diverge from the determined one or more sequences of user actions.

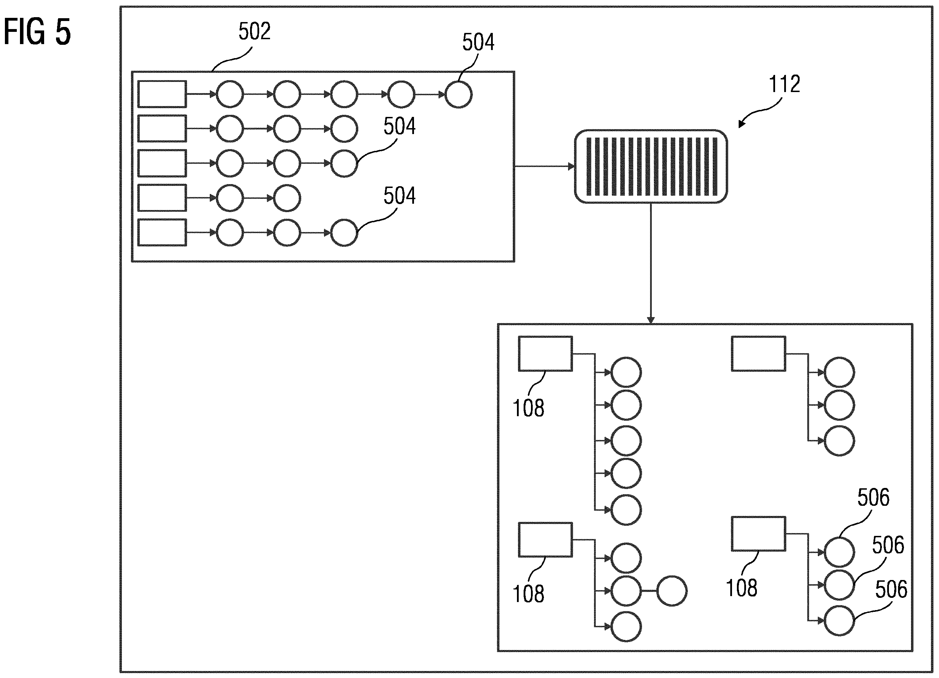

Referring to FIG. 5, a plurality of user actions 502 received by the processing unit 202 is shown. The plurality of user actions 502 are clustered into a plurality of sequences 504 of user actions by the automation module 112. The automation module 112 is further configured to generate one or more add-in programs 108. The one or more add-in programs 108 are generated from specific sequences of user actions 506.

The communication interface 208 is configured for establishing communication sessions between the plurality of human machine interfaces 120A-N, the engineering system 102, the spraying device 24 and the imaging device 126.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processor 202, the memory 204, and the input-output unit 210.

The network interface 212 may be configured to handle network connectivity, bandwidth and network traffic between the engineering system 102, plurality of human machine interfaces 120A-N and the industrial plant 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of the plant safety administrator module 112, such as those shown in FIG 2, in which an embodiment of the present invention can be implemented. In FIG 3, a automation module 112 comprises a request handler module 302, a neural network remodeller module 304, an analysis module 306, a modifier module 308, an engineering object database 310, a validation module 312 and a deployment module 314. FIG. 3 is explained in conjunction with FIG. 1 and FIG. 2.

The request handler module 302 is configured for receiving the plurality of user actions from the user or the operator. For example, the plurality of user actions are received from one of the one or more users external to the industrial environment 100 via a network. In alternative embodiment, the plurality of user actions are received from the one or the plurality of human machine interfaces 120A-N via the network.

The remodeller module 304 is configured for training the neural network.

The analysis module 306 is configured for applying the neural network on the plurlaity of user actions to generate the plurality of sequences of user actions.

The modifier module 308 is configured for modifying the neural network by application of the supervised learning algorithm or the unsupervised learning algorithm.

The engineering object database 310 is configured for generating an engineering object library comprising the plurality of add-in programs 108A-N.

The validation module 312 is configured to validate the generated at least one add-in program.

The deployment module 314 is configured for deploying the generated add-in program in the engineering system.

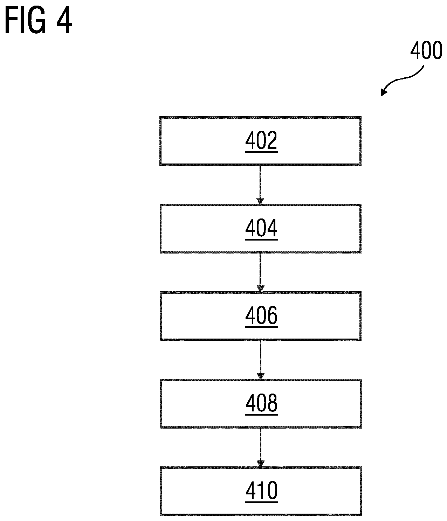

FIG 4 is a process flowchart illustrating an exemplary method 400 of automatically generating an add-in program in the engineering system 102. according to an embodiment of the present invention. FIG. 4 is explained in conjunction with FIGs. 1 to 3.

At 402, the processing unit 202 is configured to receive a plurality of user actions from a user. At step 404, the processing unit 202 is configured to cluster the plurality of user actions into a plurality of sequences of user actions, by implementation of a sequence recognition algorithm on the plurality of user actions. At step 406, the processing unit 202 is configured to determine one or more sequences of user actions, by implementation of a sequence identification procedure on the plurality of sequences of user actions. The determined one or more sequences are iterated in the plurality of sequences of user actions.

At step 408, the processing unit 202 is configured to generate an add-in program by implementation of an add-in generation procedure on the determined one or more sequences of user actions. At step 410, the processing unit 202 is configured to deploy deploying, by the processing unit 202 the generated at least one add-in program in the engineering system 102.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of reference signs

1. an industrial environment 100
2. an engineering system 102
3. one or more client devices 120A-N
4. a network 104
5.plurality of add-in program 108A-N
6. a platform 110
7. a automation module 112
8. a server 114
9. a network interface 116
10. a database 118
11. a processor(s) 202
12. an accessible memory 204
13. a storage unit 206
14. a communication interface 208
15. an input-output unit 210
16. a network interface 212
17. a bus 214
18. an integrated development environment (IDE) 216
19. a request handler module 302,
20. a neural network remodeller module 304,
21. an analysis module 306,
22. a modifier module 308,
23. a engineering object database 310,
24. a validation module 312
25. a deployment module 314

## Claims

1. A computer implemented method of automatically generating an add-in program for an engineering system, the method comprising:
receiving, by a processing unit (202), a plurality of user actions from a user;
clustering, by the processing unit (202), the plurality of user actions into a plurality of sequences of user actions, by implementation of a sequence recognition algorithm on the plurality of user actions;
determining, by the processing unit (202), one or more sequences of user actions, by implementation of a sequence identification procedure on the plurality of sequences of user actions, wherein the determined one or more sequences are iterated in the plurality of sequences of user actions;
generating, by the processing unit (202), an add-in program by implementation of an add-in generation procedure on the determined one or more sequences of user actions; and
deploying, by the processing unit (202), the generated at least one add-in program in the engineering system.

2. The method according to claim 1, further comprises:
training, by the processing unit, a neural network by application of a supervised learning algorithm on a labelled dataset, wherein
the labelled dataset comprises a set of user actions which are grouped and labelled into a set of sequences of user actions, and
the neural network is configured to cluster the plurality of user actions into the plurality of sequences of user actions.

3. The method according to claim 2, wherein implementation of the sequence recognition algorithm on the plurality of user actions comprises:
applying, by the processing unit (202), the trained neural network on the plurality of user actions; and
generating, by the processing unit (202), the plurality of sequences of user actions based on the application of the trained machine learning model on the plurality of user actions.

4. The method according to claims 1, 2, and 3, wherein determination of the one or more sequences of user actions from the plurality of sequences of user actions comprises:
determining, by the processing unit (202), a count of times for which each sequence of the plurality of sequences of user actions is iterated in a specific time interval; and
determining, by the processing unit (202), the one or more sequences which are iterated for more than a specific number of times within the time interval.

5. The method according to claims 1, 2, 3, and 4, wherein generating the add-in program comprises:
extracting, by the processing unit (202), a string of identifiers from the determined one or more sequences of user actions, wherein the string of identifiers are data objects which comprise information associated with each user action of the one or more sequences of user actions;
extracting, by the processing unit (202), one or more code segments from the extracted string of identifiers; and
generating, by the processing unit (202), the add-in program by implementation of a string concatenation procedure on the extracted one or more code segments.

6. The method according to claims 1, 2, 3, 4, and 5, wherein generating the add-in program comprises:
extracting, by the processing unit (202), a string of identifiers from the determined one or more sequences of user actions, wherein the string of identifiers comprises information associated with each user action of the one or more sequences of user actions;
extracting, by the processing unit (202), one or more code segments from the extracted string of identifiers; and
generating, by the processing unit (202), the add-in program by implementation of a string concatenation procedure on the extracted one or more code segments.

7. The method according to claim 6, further comprising:
extracting from the extracted string of identifiers, by the processing unit (202), a natural language description of each user action of the determined one or more sequences of user actions; and
generating, by the processing unit (202), a natural language description of the generated add-in program by implementation of the string concatenation procedure on the extracted natural language description of each user action of the determined one or more sequences.

8. The method according to claim 6, further deploying, by the processing unit (202), the generated at least one add-in program in the engineering system comprises:
comparing, by the processing unit (202), the determined one or more sequences of user actions with a set of sequences of user actions associated with a set of add-in programs, wherein the set of add-in programs are stored in a database;
determining, by the processing unit (202), whether the determined one or more sequences of user actions matches with a sequence of the set of sequences of user actions;
determining from the set of add-in programs, by the processing unit (202), an add-in program which is associated with the sequence of the set of sequences of user actions;
displaying, by the processing unit (202), when the determined one or more sequences of user actions matches with the sequence of the set of sequences of user actions, the determined add-in program to a user; and
deploying, by the processing unit (202), when the add-in program does not match with the generated at least one add-in program, the generated at least one add-in program into the engineering system.

9. The method according to claims 1 to 7, further comprising:
Comparing, with a list of user actions, one or more user actions of the determined one or more sequences of user actions, wherein each user action of the list of user actions is associated with a specific sequence of user actions of the plurality of sequences of user actions;
determining, by the processing unit (202), whether the one or more user actions of the determined one or more sequences of user actions, match with at least one user action of the list of user actions;
displaying, by the processing unit (202), the specific sequence of user actions which is associated with the at least one user action; and
generating, by the processing unit (202), one or more add-in programs based on the specific sequence of user actions, wherein the specific sequence of user actions comprises one or more user actions which diverge from the determined one or more sequences of user actions.

10. An engineering system (102) for automatic generation of an add-in program, wherein the engineering system (102) comprises:
a processing unit (202); and
a memory (204) coupled to the processing unit (202), wherein the memory comprises a automation module (112) stored in the form of machine-readable instructions executable by the one or more processor(s), wherein the automation module (112) is capable of performing a method according to any of the claims 1-9.

11. An industrial environment (100) comprising:
an engineering system (102) as claimed in claim 10;
a industrial plant (106) comprising one or more physical components; and
a plurality of human machine interfaces (120A-N) communicatively coupled to the engineering system (102) via a network (104), wherein the engineering system (102) is configured to perform a method according to any of the claims 1 to 9.

12. A computer-program product, having machine-readable instructions stored therein, that when executed by a processing unit (202), cause the processors to perform a method according to any of the claims 1-9.
